Europäisches Patentamt

European Patent Office

Office européen des brevets

(19)

(11) EP 0 738 911 B1

(12) FASCICULE DE BREVET EUROPEEN

(45) Date de publication et mention
de la délivrance du brevet:
**17.10.2001 Bulletin 2001/42**

(51) Int Cl.7: **G02C 7/02**

(21) Numéro de dépôt: 96400756.1

(22) Date de dépôt: 05.04.1996

(54) **Lentille opthalmique multifocale progressive**

Ophthalmische progressive Multifokallinse

Ophthalmic progressive multifocal lens

(84) Etats contractants désignés:
**AT CH DE DK ES GB IE IT LI NL SE**

(30) Priorité: **21.04.1995 FR 9504800**

(43) Date de publication de la demande:
**23.10.1996 Bulletin 1996/43**

(73) Titulaire: **ESSILOR INTERNATIONAL (Compagnie Générale d'Optique)**
**F-94220 Charenton-le-Pont (FR)**

(72) Inventeurs:
• **Ahsbahs, Françoise**
**F-94100 Saint-Maur-Des-Fosses (FR)**

• **Baudart, Thierry**
**F-75012 Paris (FR)**
• **Le Saux, Gilles**
**F-75012 Paris (FR)**

(74) Mandataire: **Hirsch, Marc-Roger et al**
**Cabinet Hirsch**
**34 rue de Bassano**
**75008 Paris (FR)**

(56) Documents cités:
**EP-A- 0 632 308            GB-A- 2 261 527**
**GB-A- 2 273 369**

**Description**

La présente invention a pour objet une lentille ophtalmique multifocale progressive, comportant une surface asphérique, comprenant une zone de vision de loin, une zone de vision de près, une zone de vision intermédiaire, une méridienne principale de progression traversant ces trois zones et une croix de montage, la dite lentille ayant une addition de puissance A égale à la variation de sphère moyenne entre un point de la zone de vision de près et un point de la zone de vision de loin.

Le document FR-A-2 699 294, incorporé par référence à la présente demande, décrit dans son préambule les différents éléments d'une lentille ophtalmique multifocale progressive (méridienne principale de progression, zone de vision de loin, zone de vision de près, etc), ainsi que les travaux menés par la demanderesse pour améliorer le confort des porteurs de telles lentilles.

La demanderesse a aussi proposé, pour mieux satisfaire les besoins visuels des presbytes et améliorer le confort des lentilles multifocales progressives, d'adapter la forme de la méridienne principale de progression, en fonction de l'addition de puissance A (demande de brevet FR-A-2 683 642)

EP-A-0 632 308 décrit une lentille progressive; il est proposé dans ce document une relation limitant les variation de sphère moyenne entre un point de la lentille et le point de référence pour la vision de loin. Plus précisément, la variation de sphère moyenne par rapport au point de référence pour la vision de loin est pour tout point de la lentille supérieure ou égale à -0,50 dioptrie, et inférieure ou égale au tiers de l'addition.

Les lentilles existantes peuvent encore être améliorées, notamment pour réduire les défauts en vision périphérique et pour augmenter le confort des porteurs. Les porteurs de lentilles multifocales progressives ressentent parfois une gêne en vision dynamique ou dans les parties latérales des zones de vision de loin et de vision de près.

La présente invention propose une lentille multifocale progressive qui pallie les inconvénients des lentilles de l'art antérieur et qui assure au porteur de bonnes performances dans la zone de vision de loin, une progression douce dans la zone de vision intermédiaire, et une bonne largeur de la zone de vision de près, en permettant une excursion latérale sensible en dehors de la zone de vision de près.

L'invention a pour objet une lentille ophtalmique multifocale progressive, comportant une surface asphérique (S), comprenant une zone de vision de loin (VL), une zone de vision de près (VP), une zone de vision intermédiaire (VI), une méridienne principale de progression (MM') traversant ces trois zones et une croix de montage (CM), la dite lentille ayant une addition de puissance A égale à la variation de sphère moyenne entre un point (P) de la zone de vision de près (VP) et un point (L) de la zone de vision de loin (VL), caractérisée en ce que lesdites zones de vision de loin, de vision intermédiaire et de vision de près sont situées entre les lignes d'isocylindre A/2 ; en ce que ladite zone de vision de loin (VL) comprend au moins un secteur angulaire d'angle $\alpha$ supérieur ou égal à 145°; en ce qu'en chaque point de la méridienne principale de progression (MM') dans la zone de vision intermédiaire (VI), le produit de la pente de la sphère moyenne par le rapport entre la longueur de progression et la largeur de la zone de vision intermédiaire présente une valeur inférieure au produit $\lambda.A$ d'un coefficient $\lambda$ par l'addition A; et en ce qu'à une ordonnée 18 mm en-dessous de celle de la croix de montage (CM) de la lentille, le produit de la largeur de la zone de vision de près par le rapport entre l'addition relative et le cylindre maximum sur un segment horizontal s'étendant sur la surface de la lentille est supérieur à 14 mm, l'addition relative étant égale à la différence entre la sphère moyenne sur la méridienne principale de progression (MM') 18 mm sous la croix de montage (CM) et la sphère moyenne à la croix de montage (CM).

Dans un mode de réalisation, ledit coefficient $\lambda$ présente une valeur comprise entre 0,125 et 0,15 mm$^{-1}$, et de préférence de l'ordre de 0,14 mm$^{-1}$.

Dans un mode de réalisation de l'invention, ledit secteur angulaire est formé de demi-droites sécantes au centre géométrique de la lentille.

La bissectrice dudit secteur angulaire peut former avec la verticale un angle inférieur à 5°, et de préférence inférieur à 2°.

Avantageusement, les lignes d'isocylindre A/2 sont asymptotiques aux demi-droites formant ledit secteur angulaire.

Dans un mode de réalisation de l'invention la longueur de progression est la distance verticale entre la croix de montage et le point de la zone de vision de près où 85% de l'addition totale sont atteints. La croix de montage peut par exemple être située 4 mm au dessus du centre géométrique de la lentille.

Avantageusement, la courbe de la représentation graphique du produit de la pente de la sphère moyenne par le rapport entre la longueur de progression et la largeur de la zone de vision intermédiaire pour les points de la méridienne principale de progression (MM') dans la zone de vision intermédiaire (VI), présente une allure de courbe en cloche, à concavité dirigée vers le bas.

Le calcul des caractéristiques de ladite lentille est réalisé par des points dont la distance au centre géométrique est inférieure à 20 mm.

D'autres caractéristiques et avantages de la présente invention apparaîtront à la lecture de la description qui suit d'un mode de réalisation de l'invention, donnée à titre d'exemple et en référence aux dessins annexés qui montrent:

- figure 1 une vue schématique de face d'une lentille multifocale progressive;

- figure 2 des représentations graphiques de la fonction $D_{VI}$ de douceur relative en zone de vision intermédiaire, pour diverses additions, et après normalisation des abscisses;
- figure 3 une vue de face d'une lentille selon l'invention, pour une addition de 1 dioptrie, montrant la méridienne principale de progression et des lignes de niveau de la sphère moyenne;
- figure 4 une vue de face d'une lentille selon l'invention, pour une addition de 1 dioptrie, montrant la méridienne principale de progression et des lignes de niveau du cylindre;
- figure 5 une vue analogue à celle de la figure 3, pour une addition de 2 dioptries;
- figure 6 une vue analogue à celle de la figure 4, pour une addition de 2 dioptries;
- figure 7 une vue analogue à celle de la figure 3, pour une addition de 3 dioptries;
- figure 8 une vue analogue à celle de la figure 4, pour une addition de 3 dioptries;

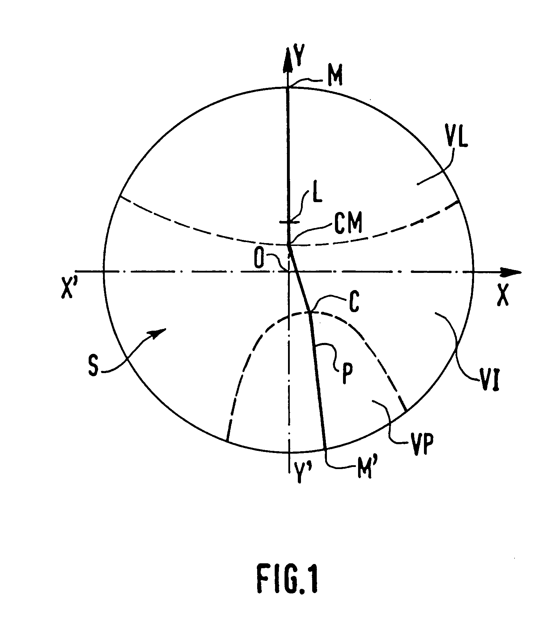

Dans la suite de la présente description, on utilise un système de coordonnées orthonormé représenté sur la figure 1 où l'axe des abscisses correspond à l'axe horizontal de la lentille et l'axe des ordonnées à l'axe vertical.

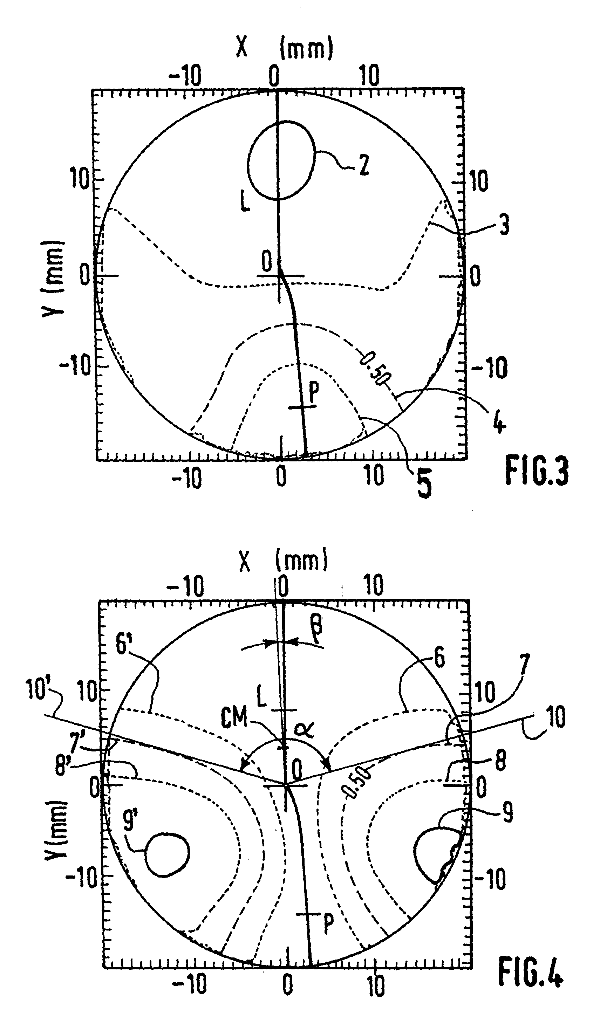

Les figures 1 et 3 à 8 représentent les caractéristiques optiques de diverses lentilles, pour un diamètre limité à une valeur de 40 mm. On a décrit en référence aux figures 3 à 8 un exemple de réalisation de l'invention.

La figure 1 représente une vue de face d'une lentille multifocale progressive 1. La lentille 1 a une face asphérique représentée sur la figure 1 et une autre face qui peut être sphérique, torique ou asphérique. On a représenté sur la figure 1 en gras la méridienne principale de progression MM' de la lentille, avec les points de mesure de la vision de loin L et de mesure de la vision de près P.

Classiquement, la lentille 1 comprend dans sa partie supérieure une zone de vision de loin VL, dans sa partie inférieure une zone de vision de près VP, et entre ces deux zones une zone intermédiaire VI. Le point O de la figure 1 est le centre géométrique de la lentille 1.

La méridienne principale de progression MM' de la lentille est essentiellement constituée de trois segments, le premier s'étendant sensiblement verticalement depuis le haut de la lentille, en passant par le point L, jusqu'à un point CM appelé croix de montage et situé entre ce point L et le centre géométrique O. Le deuxième segment s'étend à partir du point CM obliquement en direction du côté nasal de la lentille, et le troisième segment part de l'extrémité C du deuxième segment et passe par le point P de mesure de la vision de près. Les angles relatifs de ces trois segments varient avantageusement en fonction de l'addition de puissance A et en fonction de la puissance en vision de loin, comme décrit par la demanderesse dans le brevet US-A- 5 270 745.

En tout point de la surface asphérique, on définit une sphère moyenne D donnée par la formule:

$$D = \frac{n-1}{2} \left( \frac{1}{R_1} + \frac{1}{R_2} \right)$$

où:

$R_1$ et $R_2$ sont les rayons de courbure maximal et minimal exprimés en mètres, et
n l'indice optique du matériau constituant la lentille.

On appelle addition de puissance A, pour une lentille donnée, la variation de sphère moyenne entre le point L de vision de loin et le point P de vision de près.

On définit aussi un cylindre C, donné par la formule:

$$C = (n-1) \left| \frac{1}{R_1} - \frac{1}{R_2} \right|$$

On appelle lignes d'isosphère les lignes constituées par les projections dans le plan tangent en O à la surface progressive des points de la surface présentant une sphère moyenne de même valeur. De la même façon, on appelle ligne d'isocylindre les lignes constituées par la projection dans le plan précité des points de la surface présentant un cylindre de même valeur.

Selon l'invention, on considère que, pour une lentille d'addition A, la ligne d'isocylindre des points présentant un cylindre moyen de A/2 dioptrie définit sensiblement la limite des zones de vision de loin, de vision intermédiaire, et de vision de près.

Autrement dit, la ligne d'isocylindre A/2 définit la zone de vision de loin dans la partie supérieure de la lentille. Elle définit la zone de vision intermédiaire dans la partie médiane de la lentille. Enfin elle définit la zone de vision de près, dans la partie inférieure de la lentille.

Cette définition de l'invention, par rapport à l'art antérieur qui retenait des limites absolues indépendantes de l'addition, correspond mieux à la réalité perçue par le porteur de la lentille

Dans les lentilles de l'art antérieur, et en particulier dans celles de la demanderesse, la vision dans la zone entourant la méridienne principale de progression est tout à fait satisfaisante.

La présente invention propose de considérer une nouvelle définition des caractéristiques de la surface de la lentille. Cette nouvelle définition permet d'améliorer les performances perçues par le porteur dans la zone de vision de près, ainsi que la douceur du passage dans la zone de vision intermédiaire, entre la zone de vision de près et la zone de vision de loin. Cette nouvelle définition conserve aussi une zone de vision de loin étendue et agréable pour le porteur.

La face arrière d'une lentille selon l'invention est utilisée pour adapter la lentille à l'amétropie du porteur, cette face arrière pouvant être sphérique, torique ou asphérique.

Selon l'invention, la zone de vision de loin VL comprend au moins un secteur angulaire défini par deux demi-droites qui sont sécantes au centre géométrique O de la lentille. Ces demi-droites forment un secteur angulaire dirigé vers le haut, d'une largeur angulaire $\alpha$: à l'intérieur de ce secteur angulaire, et suivant la définition de la zone de vision de loin selon l'invention, tous les points présentent un cylindre inférieur à A/2 dioptries. Avantageusement, pour toutes les valeurs de l'addition A, l'angle $\alpha$ présente une valeur supérieure à 145°.

De préférence, la bissectrice (intérieure) du secteur angulaire formé par ces deux demi-droites est sensiblement verticale, pour toutes les valeurs de l'addition. Plus précisément, la bissectrice des deux demi-droites forme de préférence avec la verticale un angle $\beta$ inférieur à 5°; dans un mode de réalisation préféré, cet angle $\beta$ est inférieur à 2°.

En outre, l'invention propose que les lignes d'isocylindre A/2 dioptries soient asymptotiques aux demi-droites délimitant le secteur angulaire: lorsque l'on s'éloigne du centre géométrique de la lentille, vers la périphérie de la lentille, les lignes d'isocylindre A/2 dioptries se rapprochent des demi-droites.

Quantitativement, la distance entre une ligne d'isocylindre A/2 et la demi-droite correspondante est inférieure à 2 mm pour la partie de la lentille constituée des points présentant une distance au centre géométrique O supérieure à 10 mm.

L'invention propose une contrainte sur les positions des isocylindres A/2 dans la partie médiane de la lentille, à l'aide d'un critère de douceur relative, qui prend en compte la pente de la sphère moyenne le long de la méridienne, la longueur de progression et la largeur de la zone de vision intermédiaire.

La pente de sphère moyenne le long de la méridienne est définie comme le module du gradient de la fonction f(x,y), qui à tout point (x,y) de la méridienne associe la sphère moyenne f(x,y). On utilisera par la suite pour le critère $D_{VI}$ la fonction p(y) qui à une ordonnée y sur la lentille associe la pente de sphère moyenne sur la méridienne.

On définit la longueur de progression comme suit. On appelle croix de montage CM d'une lentille progressive un point matérialisé sur la lentille, qui est utilisé par l'opticien pour le cadrage de la lentille dans la monture. Cette croix de montage correspond à l'intersection entre la surface de la lentille et l'axe de vision du porteur lorsqu'il regarde à l'horizontale. Dans les lentilles de la demanderesse, la croix de montage est généralement située 4 mm au dessus du centre géométrique de la lentille.

On appelle longueur de progression (notée $L_p$ dans la suite) la distance verticale entre la croix de montage et le point de mesure de la zone VP de vision de près où 85% de la valeur de l'addition totale sont atteints, i.e. la valeur absolue de la différence des ordonnées de ces deux points. Cette longueur $L_p$ est représentative, pour toutes les lentilles, du trajet vertical dans la zone de vision intermédiaire.

La largeur de la zone de vision intermédiaire ou largeur horizontale $l_{A/2}(y)$ à l'isocylindre A/2 est la différence des abscisses x des deux lignes d'isocylindre A/2, pour une ordonnée y donnée.

On définit à l'aide de ces trois grandeurs, pour une lentille donnée, une fonction de l'ordonnée y représentative de la douceur relative dans la zone de vision intermédiaire. Cette fonction $D_{VI}(y)$ est égale au produit de la pente de la sphère moyenne p(y) par le rapport entre la longueur de progression $L_p$ et la largeur de la zone de vision intermédiaire (ou distance horizontale) $l_{A/2}(y)$, ce qui s'écrit aussi:

$$D_{VI}(y) = p(y).L_P/l_{A/2}\,(y)$$

Cette fonction est représentative des qualités optiques pouvant être ressenties par le porteur de la lentille dans la zone de vision intermédiaire.

Selon l'invention, la zone de vision intermédiaire définie de sorte à minimiser la valeur de la douceur relative $D_{VI}$. Avantageusement, la représentation graphique de la fonction $D_{VI}(y)$ présente une allure de courbe en cloche, présentant un maximum qui est inférieur à une valeur proportionnelle à l'addition. Plus précisément, le maximum de la fonction $D_{VI}(y)$ est inférieur au produit $\lambda$.A d'un coefficient $\lambda$ par l'addition A. Ce coefficient $\lambda$ présente une valeur dans une plage de 0,125 à 0,15 mm$^{-1}$, et de préférence de l'ordre de 0,14 mm$^{-1}$.

On détermine les isocylindres A/2 dans la zone de vision intermédiaire de sorte à satisfaire à ces conditions sur $D_{VI}(y)$.

L'invention propose une contrainte sur les positions des isocylindres A/2 dans la partie inférieure de la lentille, à l'aide d'un critère de largeur relative en vision de près $LR_{VP}$, qui prend en compte l'addition relative sur la méridienne, la largeur de la zone de vision de près (largeur horizontale à l'isocylindre A/2), et la valeur maximale du cylindre en dehors de la zone de vision de près.

Ce critère de largeur relative est défini à une ordonnée donnée, à 18 mm sous la croix de montage CM. Dans les lentilles de la demanderesse, cette ordonnée correspond au point P de mesure de la vision de près.

On définit l'addition relative $A_{VP}$ comme la différence entre la sphère moyenne sur la méridienne principale de progression MM' au point d'ordonnée 18 mm en dessous de celle de la croix de montage CM, et la sphère moyenne à la croix de montage CM.

On mesure, à une ordonnée de 18 mm sous la croix de montage CM, la largeur horizontale $l_{A/2}$ entre les isocylindres A/2, qui correspond à la largeur de la zone de vision de près, et qui est la différence des abscisses x des deux points des deux lignes d'isocylindre A/2 dont l'ordonnée est inférieure de 18 mm à celle de la croix de montage .

On mesure enfin, le cylindre maximum $C_{VP}$ sur un segment horizontal comprenant tous les points d'ordonnée y=-14 mm (18 mm sous la croix de montage) dont la distance au centre géométrique est inférieure à 20 mm (rayon utile de la lentille); en terme d'abscisses, on considère donc les points dont l'abscisse x est en module inférieure à $\sqrt{(20^2-14^2)}$= 14,3 mm. Autrement dit, on considère le cylindre maximum, à 18 mm sous la croix de montage, dans toute la largeur de la lentille, même au delà de la limite de la zone de vision de près.

On définit la largeur relative en vision de près $LR_{VP}$ comme suit:

$$LR_{VP} = I_{A/2}.A_{VP}/C_{VP}$$

Cette largeur relative est représentative non seulement de la largeur de la zone de vision de près, mais aussi de la douceur de la lentille en dehors de celle-ci, à 18 mm sous la croix de montage CM.

Selon l'invention, la zone de vision de près est définie de sorte à maximiser la valeur de la largeur relative en vision de près $LR_{VP}$; avantageusement, elle est supérieure à une valeur de l'ordre de 14 mm, et ce pour toutes les additions. On détermine les isocylindres A/2 dans la zone de vision de près de sorte à satisfaire à cette condition.

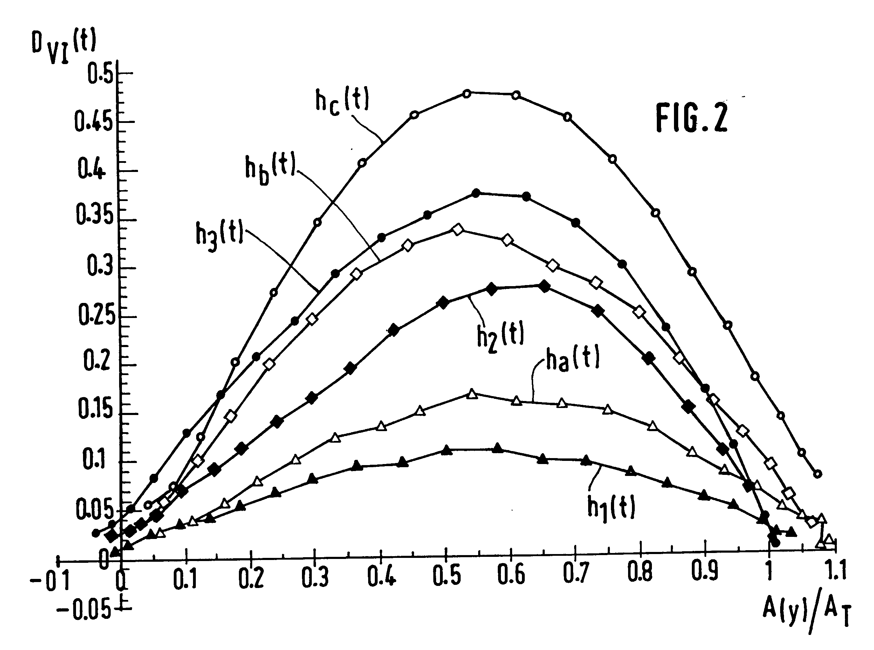

La figure 2 montre des représentations graphiques de la fonction $D_{VI}$ de douceur relative en zone de vision intermédiaire, pour diverses additions, et après normalisation des abscisses. Pour permettre la comparaison aisée de lentilles dont les points VP et CM sont à des ordonnées différentes, on a normalisé sur la figure 2 l'axe des abscisses: on n'a pas tracé directement la représentation graphique de la fonction $D_{VI}(y)$, en fonction de y, mais en fonction d'un paramètre t qui vaut

$$t = g(y) = A(y)/A_T$$

où A(y) est la différence de sphère moyenne entre un point de la méridienne principale de progression d'ordonnée y et la croix de montage, et où
$A_T$ est la différence de sphère moyenne entre le point de la méridienne principale de progression VP de vision de près sous la croix de montage et la croix de montage.

Le paramètre t varie dans l'intervalle [0, 1], et on a représenté à la figure 2 la fonction h(t), qui vaut:

$$h(t) = D_{VI}[g^{-1}(t)]$$

La figure 2 montre les représentations graphiques respectives $h_1(t)$, $h_2(t)$, et $h_3(t)$, pour des additions de 1, 2 et 3 dioptries, correspondant aux lentilles des figures 3 et 4, 5 et 6, 7 et 8. Chacune de ces courbes présente bien une allure de cloche, avec un maximum de 0,11, 0,275 et 0,372 dioptries.mm$^{-1}$, qui est bien inférieur à 0,14.A, soit respectivement 0,14x1, 0,14x2 et 0,14x3 dioptries.mm$^{-1}$.

On a en outre représenté les courbes correspondantes $h_a(t)$, $h_b(t)$ et $h_c(t)$ pour une famille de lentilles de l'art antérieur, et pour des additions respectives de 1, 2 et 3 dioptries. On constate bien que ces trois dernières courbes, si elles présentent une allure de cloche, ont un maximum sensiblement au dessus des valeurs précitées de 0,14, 0,28 et 0,42 dioptries.mm$^{-1}$ (0,14.A).

Les figures 3 à 8 sont des vues de face de lentilles selon l'invention montrant la méridienne principale de progression et des lignes de niveau de la sphère moyenne ou du cylindre. Les lentilles des figures 3 et 4, 5 et 6, 7 et 8 correspondent respectivement à des additions de 1, 2 et 3 dioptries, données à titre d'exemple.

Les figures 3 et 4 correspondent à une addition de 1 dioptrie.

On retrouve sur la figure 3 les éléments connus représentés sur la figure 1. On a en outre porté à la figure 3 la croix de montage CM, et les lignes d'isosphère. Les lignes d'isosphère de la figure 3 sont des lignes 2, 3, 4, 5 qui présentent respectivement une sphère moyenne égale à celle du point L de vision de loin, ou supérieure de 0,25, 0,5, 0,75 dioptries .

De la même façon, on retrouve sur la figure 4 les éléments connus représentés sur les figures 1 et 3. On a en outre porté à la figure 4 les lignes d'isocylindre. Comme le cylindre est faible le long de la méridienne principale de progression, les lignes d'isocylindre sont au nombre de deux pour chaque valeur du cylindre. Les lignes d'isocylindre de la figure 4 sont des lignes 6 et 6', 7 et 7', 8 et 8', 9 et 9' qui présentent respectivement un cylindre de 0,25, 0,5, 0,75 ou 1,0 dioptries.

Comme indiqué plus haut, la limite de la zone de vision de loin est sensiblement constituée, dans la partie supérieure de la lentille, par les lignes 7 et 7' d'isocylindre A/2 = 0,5 dioptrie.

Comme on peut le voir sur la figure 4, la zone de vision de loin VL comprend bien le secteur angulaire défini par deux demi-droites 10 et 10'. L'angle $\alpha$ entre ces demi-droites présente une valeur de l'ordre de 149,6°: la demi-droite 10' forme avec l'horizontale un angle de l'ordre de 15,4°, et la demi-droite 10 forme avec l'horizontale un angle de l'ordre de 15°. L'angle $\beta$ vaut alors 0,2°, et est bien inférieur à 2°.

Comme on peut le voir sur la figure 4, les lignes d'isocylindre A/2=0,5 dioptries sont asymptotiques aux demi-droites 10 et 10'.

La douceur relative dans la zone de vision intermédiaire $D_{VI}(y)$, représentée à la figure 2 par la courbe normalisée $h_1(t)$ satisfait bien les conditions de l'invention.

Enfin, la largeur relative en vision de près $LR_{VP}$ a une valeur de 14,1 mm, qui est bien supérieure à 14 mm.

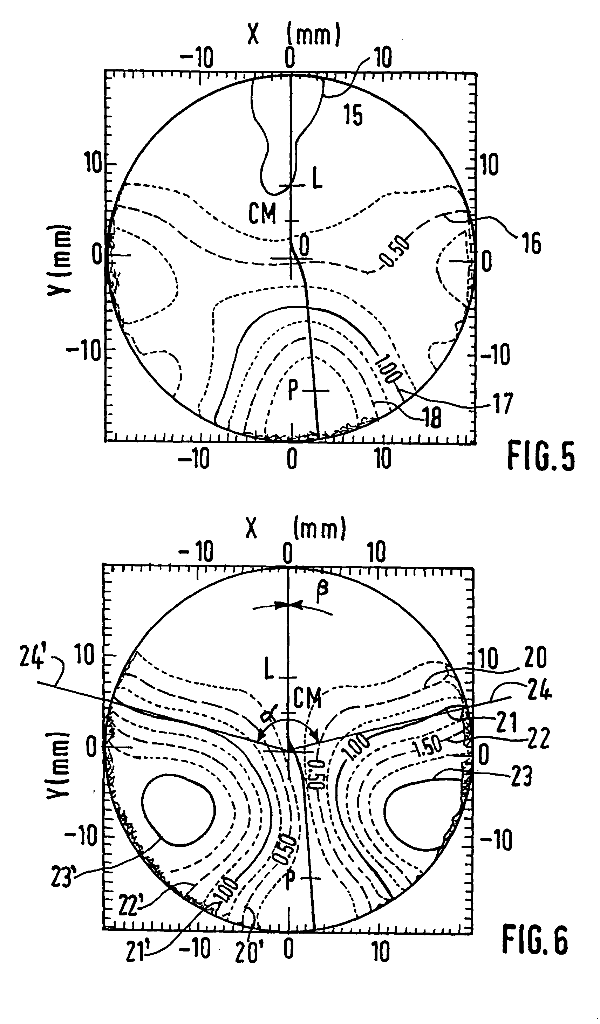

La figure 5 montre une vue analogue à celle de la figure 3, pour une addition de 2 dioptries; on retrouve sur la figure 5 les lignes 15, 16, 17, 18 d'isosphère moyenne 0, 0,5, 1, et 1,5 dioptries au-dessus de la sphère du point L.

La figure 6 montre une vue analogue à celle de la figure 4, pour une addition de 2 dioptries, i.e. pour la lentille de la figure 5. On voit sur la figure 6 les lignes 20 et 20', 21 et 21', 22 et 22', 23 et 23' d'isocylindre 0,5, 1, 1,5 et 2 dioptries. Comme dans la lentille des figures 3 et 4, la zone de vision de loin (isocylindre A/2=1 dans la partie supérieure de la lentille) comprend au moins un secteur défini par deux demi-droites 24, 24' sécantes au centre géométrique et formant un angle $\alpha$ de 151°.

La demi-droite 24' forme avec l'horizontale un angle de l'ordre de 14,5°, et la demi-droite 24 forme avec l'horizontale un angle de l'ordre de 14,5°. L'angle $\beta$ vaut alors 0°, et est bien inférieur à 2°.

Comme on peut le vérifier sur la figure 6, les lignes 21 et 21' d'isocylindre A/2=1 dioptries sont asymptotiques aux demi-droites 24 et 24'.

La douceur relative dans la zone de vision intermédiaire $D_{VI}(y)$, représentée à la figure 2 par la courbe normalisée $h_2(t)$ satisfait bien les conditions de l'invention.

Enfin, la largeur relative en vision de près $LR_{VP}$ a une valeur de 16,5 mm, qui est bien supérieure à 14 mm.

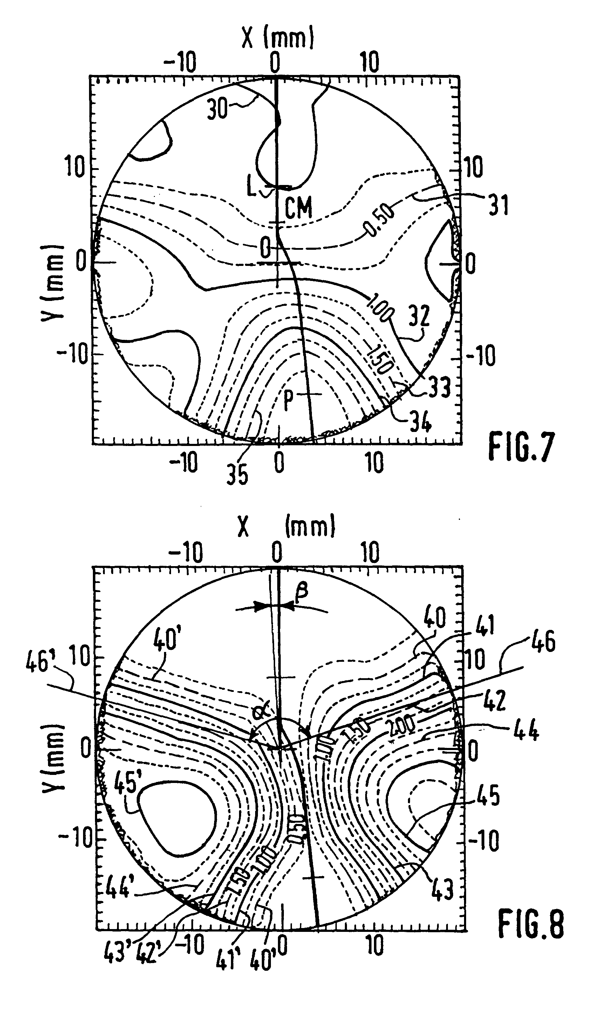

La figure 7 montre une vue analogue à celle de la figure 3, pour une addition de 3 dioptries; on retrouve sur la figure 7 des éléments analogues à ceux de la figure 3, et notamment les lignes 30, 31, 32, 33, 34 et 35 d'isosphère moyenne 0, 0,5, 1, 1,5, 2 et 2,5 dioptries au-dessus de la sphère du point L.

La figure 8 montre une vue analogue à celle de la figure 4, pour une addition de 3 dioptries, i.e. pour la lentille de la figure 7. On voit sur la figure 6 les lignes 40 et 40', 41 et 41', 42 et 42', 43 et 43', 44 et 44', 45 et 45' d'isocylindre 0,5, 1, 1,5, 2, 2,5 et 3 dioptries. Comme dans les lentille des figures 3, 4 et 5, 6, la zone de vision de loin (isocylindre A/2=1,5 dans la partie supérieure de la lentille) comprend au moins un secteur défini par deux demi-droites 46, 46' sécantes au centre géométrique et formant un angle $\alpha$ de 145°.

La demi-droite 46' forme avec l'horizontale un angle de l'ordre de 16°, et la demi-droite 46 forme avec l'horizontale un angle de l'ordre de 19°. L'angle $\beta$ vaut alors 1,5°, et est bien inférieur à 2°.

Comme on peut le vérifier sur la figure 8, les lignes 42 et 42' d'isocylindre A/2=1,5 dioptries sont asymptotiques aux demi-droites 46 et 46'.

La douceur relative dans la zone de vision intermédiaire $D_{VI}(y)$, représentée à la figure 2 par la courbe normalisée $h_3(t)$ satisfait bien les conditions de l'invention.

Enfin, la largeur relative en vision de près $LR_{VP}$ a une valeur de 15,1 mm, qui est bien supérieure à 14 mm.

On détaille maintenant les différentes caractéristiques qui permettent de réaliser les différentes lentilles selon l'invention. La surface des lentilles est de façon connue en soi, continue et trois fois continûment dérivable.

On définit, pour chacune des lentilles de la famille, une méridienne principale de progression. On peut avantageusement utiliser à cet effet l'enseignement du brevet FR-A-2 683 642 susmentionné, qui est incorporé par référence dans son entier à la présente description. On peut aussi utiliser toute autre définition de la méridienne principale de progression pour appliquer l'enseignement de l'invention.

On fixe une contrainte sur la zone de vision de loin (isocylindre A/2 dans la partie supérieure de la lentille) en imposant qu'elle couvre au moins un secteur angulaire défini par deux demi-droites sécantes au centre géométrique de la lentille et formant un angle d'au moins 145°; avantageusement, la bissectrice de ce secteur forme avec la verticale un angle d'au plus 2°. Les lignes d'isocylindre A/2 sont asymptotiques à ces demi-droites, au moins pour les points situés à une distance du centre de la lentille comprise entre 10 et 20 mm. Dans le secteur défini entre ces deux demi-droites, le cylindre est inférieur à A/2 dioptrie. Ces valeurs permettent d'assurer une dimension de la zone de vision de loin assurant de bonnes performances pour le porteur.

Le cas échéant, en fonction du choix de la méridienne principale de progression, le point d'intersection des deux demi-droites pourrait être distinct du centre géométrique de la lentille; le point d'intersection pourrait être confondu avec la croix de montage, ou avec le point L de contrôle de la vision de loin.

On fixe une contrainte sur la zone de vision intermédiaire (isocylindre A/2 dans la partie médiane de la lentille) en imposant que la douceur relative en zone de vision intermédiaire $D_{VI}$ satisfasse les conditions mentionnées plus haut.

Enfin, on fixe une contrainte sur la zone de vision de près (isocylindre A/2 dans la partie inférieure de la lentille) en imposant que la largeur relative en zone de vision de près $LR_{VP}$ satisfasse la condition mentionnée plus haut.

Ainsi, on définit sur toute la lentille une zone dans laquelle le cylindre est inférieur à A/2 dioptries, non seulement à l'aide de segments de droites, mais aussi à l'aide de fonctions qui garantissent de bonnes performances pour le porteur, même pour de fortes additions.

Pour définir complètement une lentille selon l'invention, on utilise les contraintes détaillées ci-dessus, ou seulement certaines d'entre elles, comme conditions aux limites dans un programme d'optimisation connu en soi, de sorte à obtenir une carte des altitudes des différents points de la lentille. Ceci permet, selon un procédé aussi connu en soi, la préparation de moules et le moulage des lentilles à l'aide de matériaux organiques ou inorganiques.

A titre d'exemple, on peut pour définir des lentilles d'addition 1, 2 et 3, imposer les conditions mentionnées en références aux figures 2, 4, 6 et 8.Ces différentes conditions permettent de définir la surface de la lentille.

Bien entendu, la présente invention n'est pas limitée à la présente description: entre autres, la surface asphérique pourrait être la surface dirigée vers le porteur des lentilles.

## Revendications

**1.** Lentille ophtalmique multifocale progressive, comportant une surface asphérique (S), comprenant une zone de vision de loin (VL), une zone de vision de près (VP), une zone de vision intermédiaire (VI), une méridienne principale de progression (MM') traversant ces trois zones et une croix de montage (CM), ladite lentille ayant une addition de puissance A égale à la variation de sphère moyenne entre un point (P) de la zone de vision de près (VP) et un point (L) de la zone de vision de loin (VL), **caractérisée en ce que**

- lesdites zones de vision de loin, de vision intermédiaire et de vision de près sont délimitées par des lignes d'isocylindre A/2 (7, 7'; 21, 21'; 42, 42');
- ladite zone de vision de loin (VL) comprend au moins un secteur angulaire d'angle a supérieur ou égal à 145°;
- en chaque point de la méridienne principale de progression (MM') dans la zone de vision intermédiaire (VI), le produit (DVI(y)) de la pente de la sphère moyenne (p(y)) par le rapport entre la longueur de progression ($L_P$) et la largeur de la zone de vision intermédiaire ($I_{A/2}(y)$) présente une valeur inférieure au produit $\lambda.A$ d'un coefficient $\lambda$ par l'addition A, soit:

$$p(y).L_P/I_{A/2}(y) < \lambda.A$$

le coefficient $\lambda$ présentant une valeur comprise entre 0,125 et 0,15 mm$^{-1}$, la longueur de progression étant la distance verticale entre le point de la zone de vision de près où 85% de l'addition sont atteints et la croix de montage (CM);

- à une ordonnée 18 mm en-dessous de celle de la croix de montage (CM) de la lentille, le produit ($LR_{VP}$) de la largeur de la zone de vision de près ($I_{A/2}$) par le rapport entre l'addition relative ($A_{VP}$) et le cylindre maximum ($C_{VP}$) sur un segment horizontal s'étendant sur la surface de la lentille est supérieur à 14 mm, soit:

$$I_{A/2}.A_{VP}/C_{VP} > 14\ mm$$

l'addition relative $A_{VP}$ étant égale à la différence entre la sphère moyenne sur la méridienne principale de progression (MM') 18 mm sous la croix de montage (CM) et la sphère moyenne à la croix de montage (CM).

**2.** Lentille ophtalmique multifocale progressive selon la revendication 1, **caractérisée en ce que** ledit coefficient $\lambda$ présente une valeur de l'ordre de 0,14 mm$^{-1}$.

**3.** Lentille ophtalmique multifocale progressive selon la revendication 1 ou 2, **caractérisée en ce que** ledit secteur angulaire est formé de demi-droites (10, 10'; 24, 24'; 46, 46') sécantes au centre géométrique (O) de la lentille.

**4.** Lentille ophtalmique multifocale progressive selon la revendication 1, 2 ou 3, **caractérisée en ce que** la bissectrice dudit secteur angulaire forme avec la verticale un angle inférieur à 5°, et de préférence inférieur à 2°.

**5.** Lentille ophtalmique multifocale progressive selon l'une des revendications 1 à 4, **caractérisée en ce que** les lignes d'isocylindre A/2 (7, 7'; 21, 21'; 42, 42') sont asymptotiques aux demi-droites (10, 10'; 24, 24'; 46, 46') formant ledit secteur angulaire.

**6.** Lentille ophtalmique multifocale progressive selon l'une des revendications 1 à 5, **caractérisée en ce que** la croix de montage (CM) est située 4 mm au dessus du centre géométrique de la lentille.

**7.** Lentille ophtalmique multifocale progressive selon l'une des revendications 1 à 6, **caractérisée en ce que** la courbe de la représentation graphique du produit ($D_{VI}(y)$) de la pente de la sphère moyenne (p(y)) par le rapport entre la longueur de progression ($L_P$) et la largeur de la zone de vision intermédiaire ($I_{A/2}(Y)$), pour les points de la méridienne principale de progression (MM') dans la zone de vision intermédiaire (VI), présente une allure de courbe en cloche, à concavité dirigée vers le bas.

**8.** Lentille ophtalmique multifocale progressive selon l'une des revendications 1 à 7, **caractérisée en ce que** le cylindre maximum ($C_{VP}$) est calculé sur un segment horizontal et pour les points de ladite lentille dont la distance au centre géométrique (O) est inférieure à 20 mm.

**Patentansprüche**

1. Multifukale ophthalmische Gleitsichtlinse, umfassend eine asphärische Fläche (S), umfassend eine Fernsichtzone (VL), eine Nahsichtzone (VP), eine Mittelsichtzone (VI), einen Hauptprogressionsmeridian (MM'), welcher die drei Zonen durchquert, sowie ein Montagekreuz (CM), wobei die Linse über eine Stärkeaddition (A) verfügt, gleich zu der Veränderung der mittleren Flächenbrechkraft zwischen einem Punkt (P), der Nahsichtzone (VP) und einem Punkt (L), der Fernsichtzone (VL), **dadurch gekennzeichnet**,

   - daß die Fernsicht-, Mittelsicht- und Nahsichtzonen durch Isozylinder- bzw. Isoflächenastigmatismuslinien A/2 (7, 7'; 21, 21'; 42, 42') begrenzt sind;
   - die Fernsichtzone (VL) zumindest einen winkelmäßigen Sektor mit einem Winkel von größer oder gleich zu 145° umfaßt;
   - bei jedem Punkt des Hauptprogressionsmeridians (MM') in der Mittelsichtzone (VI) das Produkt ($D_{VI}(y)$) des Gradienten der mittleren Flächenbrechkraft ($p(y)$) mit der Beziehung zwischen der Progressionslänge ($L_P$) und der Breite der Mittelsichtzone ($I_{A/2}(y)$) einen Wert aufweist, der geringer ist als das Produkt $\lambda \cdot A$ eines Koeffizienten $\lambda$ mit der Addition A, so daß gilt:

$$p(y) \cdot L_P/I_{A/2}(y) < \lambda \cdot A$$

   wobei der Koeffizient $\lambda$ einen Wert hat, enthalten zwischen 0,125 und 0,15 mm$^1$, wobei die Progressionslänge der vertikale Abstand zwischen dem Punkt der Nahsichtzone ist, an dem 85% der Addition erhalten ist, und dem Montagekreuz (CM);
   - bei einer Ordinate von 18mm unterhalb jener des Montagekreuzes (CM) der Linse das Produkt ($LR_{VP}$) der Breite der Nahsichtzone ($I_{A/2}$) mit der Beziehung zwischen der relativen Addition ($A_{VP}$) und dem maximalen Flächenastigmatismus bzw. -zylinder ($C_{VP}$) an dem horizontalen Segment, welches sich über die Fläche der Linse erstreckt größer ist als 14 mm, so daß gilt:

$$I_{A/2} \cdot A_{VP}/C_{VP} > 14 \text{ mm}$$

   wobei die relative Addition $A_{VP}$ gleich ist zu der Differenz von der mittleren Flächenbrechkraft an dem Hauptprogressionsmeridian (MM'), und zwar 18 mm unter dem Montagekreuz (CM) und der mittleren Flächenbrechkraft am Montagekreuz (CM).

2. Multifukale ophthalmische Gleitsicht- bzw. Progressivlinse nach Anspruch 1, **dadurch gekennzeichnet, daß** der Koeffizient $\lambda$ einen Wert aufweist in der Größenordnung von 0,14 mm$^{-1}$.

3. Multifukale ophthalmische Gleitsichtlinse nach Anspruch 1 oder 2, **dadurch gekennzeichnet, daß** der winkelmäßige Sektor gebildet ist aus Halbgeraden (10, 10'; 24, 24'; 46, 46'), die Sekanten zu der geometrischen Mitte (O) der Linse sind.

4. Multifukale ophthalmische Gleitsichtlinse nach Anspruch 1, 2 oder 3, **dadurch gekennzeichnet, daß** die Sekante des winkelmäßigen Sektors mit der Vertikalen einen Winkel von weniger als 5° und insbesondere von weniger als 2° ausbildet.

5. Multifukale ophthalmische Gleitsichtlinse nach einem der Ansprüche 1 bis 4, **dadurch gekennzeichnet, daß** die Isozylinder- bzw. Isoflächenastigmatismuslinien A/2 (7, 7'; 21, 21'; 42, 42') asymptotenartig zu den Halbgeraden (10, 10'; 24, 24'; 46, 46') verlaufen, welche den winkelmäßigen Sektor ausbilden.

6. Multifukale ophthalmische Gleitsichtlinse nach einem der Ansprüche 1 bis 5, **dadurch gekennzeichnet, daß** das Montagekreuz (CM) sich 4 mm oberhalb der geometrischen Mitte der Linse befindet.

7. Multifukale ophthalmische Gleitsichtlinse nach einem der Ansprüche 1 bis 6, **dadurch gekennzeichnet, daß** der Kurvenverlauf der graphischen Darstellung des Produktes ($D_{VI}(y)$) des Gradienten der mittleren Flächenbrechkraft ($p(y)$) mit der Beziehung zwischen der Progressionslänge ($L_P$) und der Breite der Mittelsichtzone ($I_{A/2}(y)$) für die Punkte des Hauptprogressionsmeridianes (MM') in der Mittelsichtzone (VI) eine glokken-kurvenartige Erscheinung mit nach unten gerichteter Konkavheit zeigt.

8. Multifukale ophthalmische Gleitsichtlinse nach einem der Ansprüche 1 bis 7, **dadurch gekennzeichnet, daß** der maximale Flächenastigmatismus ($C_{VP}$) errechnet ist an einem horizontalen Segment und zwar für die Punkte der Linse, deren Abstand zur geometrischen Mitte (O) kleiner als 20 mm ist.

**Claims**

1. A progressive multifocal ophthalmic lens having an aspherical surface (S) comprising a far vision region (VL), a near vision region (VP), an intermediate vision region (VI), a main meridian of progression (MM') passing through said three regions and a fitting center (CM), said lens having a power addition factor A defined as the variation in mean sphere between a control point (P) in the near vision region (VP) and a control point (L) in the far vision region (VL), **characterized in that**:

limits of said far, intermediate and near vision regions are defined by isocylinder lines (7, 7'; 21, 21'; 42, 42')of a value equal to A/2, said far vision region (VL) comprises at least one angular sector with an included angle greater than or equal to 145°, at each point on the main meridian of progression (MM') within said intermediate vision region (VI), the product $D_{VI}(y)$ of slope of mean sphere (p(y))and the ratio between the length of progression $L_P$, and a width of the intermediate vision region $I_{A/2}(y)$ has a value less than the product $\lambda.A$ of a coefficient $\lambda$ and poxer addition A, i.e.

$$p(y).L_p/I_{A/2}(y) < \lambda\ A$$

coefficient $\lambda$ having a value comprised between 0.125 and 0.15 mm$^{-1}$, the length of progression being the vertical distance between said fitting center (CM) and a point in said near vision region at which the power addition factor is 85% of the maximum, at a point on the y-axis 18 mm below said fitting center (CM) of the lens, the product ($LR_{VP}$) of the width of said near vision region ($I_{A/2}$) and the ratio between relative power addition ($A_{VP}$) and maximum cylinder ($C_{VP}$)over a horizontal segment extending over a surface of said lens is greater than 14 mm:

$$I_{A/2}.A_{VP}/C_{VP} > 14\ mm$$

relative power addition $A_{VP}$ being equal to a difference between mean sphere at a point on said main meridian of progression (MM') 18 mm below said fitting center (CM) and mean sphere at said fitting center (CM).

2. A progressive multifocal ophthalmic lens according to claim 1, **characterized in that** said coefficient $\lambda$ has a value of the order of 0.14 mm$^{-1}$.

3. A progressive multifocal ophthalmic lens according to claim 1 or 2, **characterized in that** said angular sector is defined by half-lines (10, 10', 24, 24'; 46, 46') that intersect at the geometrical center (O) of said lens.

4. A progressive multifocal ophthalmic lens according to claim 1, 2 or 3, **characterized in that** the bisector of said angular sector makes an angle of less than 5° and preferably less than 2° with the vertical.

5. A progressive multifocal ophthalmic lens according to one of claims 1 to 4, **characterized in that** said isocylinder lines of a value equal to A/2 (7, 7'; 21, 21'; 42, 42') are asymptotic to said half-lines (10, 10', 24, 24'; 46, 46') defining said angular sector.

6. A progressive multifocal ophthalmic lens according to one of claims 1 to 5, **characterized in that** said fitting center (CM) is located 4 mm above the geometrical center of said lens.

7. A progressive multifocal ophthalmic lens according to one of claims 1 to 6, **characterized in that** a curve that graphically represents the product $D_{VI}(y)$ of slope of mean sphere (p(y))and the ratio between the length of progression $L_P$, and a width of the intermediate vision region $I_{A/2}(y)$ for points on the the main meridian of progression (MM') in the intermediate vision region (VI), has a bell shape, the concavity of which is directed downwardly.

8. A progressive multifocal ophthalmic lens according to one of claim 1 to 7, **characterized in that** the maximum cylinder ($C_{vp}$) of said lens is calculated over a horizontal segment and for those points on said lens situated at a distance of less than 20 mm from the geometrical center (O) of said lens.

FIG.1

FIG.2

$h_C(t)$

$h_b(t)$

$h_3(t)$

$h_2(t)$

$h_a(t)$

$h_1(t)$

$D_{VI}(t)$

0.5
0.45
0.4
0.35
0.3
0.25
0.2
0.15
0.1
0.05
0
-0.05
-0.1

$A(y)/A_T$

0.1  0.2  0.3  0.4  0.5  0.6  0.7  0.8  0.9  1  1.1

**FIG.3**

**FIG.4**

FIG.5

FIG.6

FIG.7

FIG.8

14